# EUROPEAN PATENT APPLICATION

(11) **EP 4 664 791 A1**
(43) Date of publication of application: **17.12.2025**
(21) Application number: 24182346.7
(22) Date of filing: 14.06.2024
(51) Int. Cl.: H04B 10/61, H04B 10/50

(54) **APPARATUS AND METHOD FOR COHERENT RECEPTION**

(71) Applicant: Nokia Solutions and Networks Oy, 02610 Espoo (FI)
(72) Inventor: ADIB, Md Mosaddek Hossain, 71638 Ludwigsburg (DE); Füllner, Christoph, 76199 Karlsruhe (DE); Bonk, Rene, 75181 Pforzheim (DE)
(74) Representative: Zinsinger, Norbert

(57) **Abstract**

The present invention discloses an apparatus comprising means for: adjusting an operation parameter of a laser (210), thereby adjusting an emission frequency of the laser (210), wherein the laser (210) is suitable to be used as a local oscillator for a coherent optical receiver in an optical network unit, ONU, wherein the laser (210) is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, wherein the emission frequency of the laser corresponding to the first target range is aligned to the frequency of the downstream signal.

## Description

### Field of the invention

Various example embodiments relate to communication technology, specifically to optical network.

### Background

Conventionally, passive optical network (PON) is based on intensity-modulation/direct detection (IM-DD) technology, because of its simple optical-frontend design and low-cost. However, with an increasing demand in the data rate of PON, it will be very challenging to design future high speed PON system based on IM-DD with rates of 200Gbit/s and beyond using a single wavelength channel in terms of chromatic dispersion (CD), coexistence, and the availability of matured components e.g., analog to digital converters (ADCs), digital to analog converters (DACs), driver amplifier, transimpedance amplifiers (TIAs) and burst mode TIAs.

Inphase and quadrature modulation (IQM) and coherent reception is considered as an alternative for IM-DD technology. The IQM allows phase and amplitude modulation as well as the polarization multiplexing. The coherent receiver mixes the received signal with a local reference laser, also known as local oscillator (LO), which allows to detect the phase, amplitude, and polarization modulation.

Currently, the IQM and coherent-reception based communication systems are developed for point-to-point (P2P) communication, and employ premium quality components and devices, e.g., narrow linewidth and C-band tunable laser. The cost related to such components and thus the available coherent transceiver is high.

However, PONs are much more cost sensitive as P2P systems. In order to implement coherent-reception in PON, it is necessary to reduce the cost of a coherent receiver.

There are several ways to reduce the cost of coherent receiver, among them employing low quality components (such as cheaper LO lasers), reduced effective-number-of-bit of the ADCs and simplified digital signal processor (DSP).

Typical P2P coherent receiver allows to tune full C-band (1530 nm - 1565 nm) and/or L-band (1565 nm - 1625 nm) using external cavity laser (ECL), this feature is not required for low-cost application such as PON. Therefore, low-cost fixed wavelength laser, such as distributed feedback (DFB) laser may be employed. It will allow to reduce the laser chip cost. However, there are few non-scaling costs related to the laser chip, such as, laser burn-in, testing, calibration, and characterization. The non-scaling cost may be significantly reduced if partial testing is employed. However, a wavelength window may be defined instead of specific wavelength with a partially tested laser. Therefore, this type of laser will introduce other problems, such as LO wavelength can drift for various reasons e.g. temperature, fabrication in perfection, and inappropriate laser settings. Thus, wavelength alignment cannot be guaranteed with a cheap-laser (partially tested DFB laser).

There is thus a need for an improved apparatus and method to solve the wavelength alignment problem of using cheap laser.

### Summary of the Invention

The invention is set out in the appended set of claims.

According to a first aspect of the invention, there is provided an apparatus, comprising means for: adjusting an operation parameter of a laser, thereby adjusting an emission frequency of the laser, wherein the laser is suitable to be used as a local oscillator for a coherent optical receiver in an optical network unit, ONU, wherein the laser is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, herein the emission frequency of the laser corresponding to the first target range is aligned to the frequency of the downstream signal.

According to a second aspect of the invention, there is provided a method, comprising: adjusting an operation parameter of a laser, thereby adjusting an emission frequency of the laser, wherein the laser is suitable to be used as a local oscillator for a coherent optical receiver in an optical network unit, ONU, wherein the laser is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, herein the emission frequency of the laser corresponding to the first target range is aligned to the frequency of the downstream signal.

According to a third aspect of the invention, there is provided a computer program comprising instructions for causing an apparatus to perform at least the following: adjusting an operation parameter of a laser, thereby adjusting an emission frequency of the laser, wherein the laser is suitable to be used as a local oscillator for a coherent optical receiver in an optical network unit, ONU, wherein the laser is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, herein the emission frequency of the laser corresponding to the first target range is aligned to the frequency of the downstream signal.

According to a fourth aspect of the invention, there is provided an apparatus comprising at least one processor and at least one memory including computer program code, the at least one memory and the computer program code configured to with the at least one processor, cause the apparatus at least to perform: adjusting an operation parameter of a laser, thereby adjusting an emission frequency of the laser, wherein the laser is suitable to be used as a local oscillator for a coherent optical receiver in an optical network unit, ONU, wherein the laser is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, herein the emission frequency of the laser corresponding to the first target range is aligned to the frequency of the downstream signal.

According to a fifth aspect of the invention, there is provided a non-transitory computer readable medium comprising program instructions for causing an apparatus to perform at least the following: adjusting an operation parameter of a laser, thereby adjusting an emission frequency of the laser, wherein the laser is suitable to be used as a local oscillator for a coherent optical receiver in an optical network unit, ONU, wherein the laser is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, herein the emission frequency of the laser corresponding to the first target range is aligned to the frequency of the downstream signal.

According to a sixth aspect of the invention, there is provided a computer readable medium comprising program instructions for causing an apparatus to perform at least the following: adjusting an operation parameter of a laser, thereby adjusting an emission frequency of the laser, wherein the laser is suitable to be used as a local oscillator for a coherent optical receiver in an optical network unit, ONU, wherein the laser is uncalibrated in terms of the relationship between the operation parameter and the emission frequency of the laser; obtaining an indication of an electrical power of a downstream signal received by the coherent optical receiver, while adjusting the operation parameter; determining a first target range of the operation parameter based on a relationship between the obtained indication of the electrical power and the corresponding operation parameter, herein the emission frequency of the laser corresponding to the first target range is aligned to the frequency of the downstream signal.

According to the example embodiments, wavelength of uncalibrated LO lasers at the coherent receiver is coarsely aligned to the wavelength of the received downstream signal. The coarse alignment can be done within short time and is only necessary upon initialization or when wavelength alignment is lost. With minor time consumption, it is possible to implement a coherent receiver with low-cost uncalibrated lasers instead of high cost tunable, pre-calibrated LO lasers. The cost of a coherent receiver can be significantly reduced.

### Brief description of the figures

For a more complete understanding of example embodiments of the present invention, reference is now made to the following descriptions taken in connection with the accompanying drawings in which:
Figure 1a shows a schematic block diagram of a P2P communication system implementing IQM and coherent-reception;
Figure 1b shows schematic optical spectra of the downstream signal and the LO used in the system of Figure 1a;
Figure 2a shows a schematic block diagram of a PON communication system implementing IQM and coherent-reception according to an embodiment;
Figure 2b shows schematic optical spectra of the downstream signal and the laser used in the ONU of Figure 2a;
Figure 3 shows a detailed block diagram of the ONU of Figure 2a;
Figure 4 shows an example curve of the obtained electrical power as a function of the temperature of the laser;
Figure 5 shows a flow diagram according to example methods implementing various embodiments;
Figure 6 shows a block diagram depicting the apparatus 201 operating in accordance with various embodiment.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

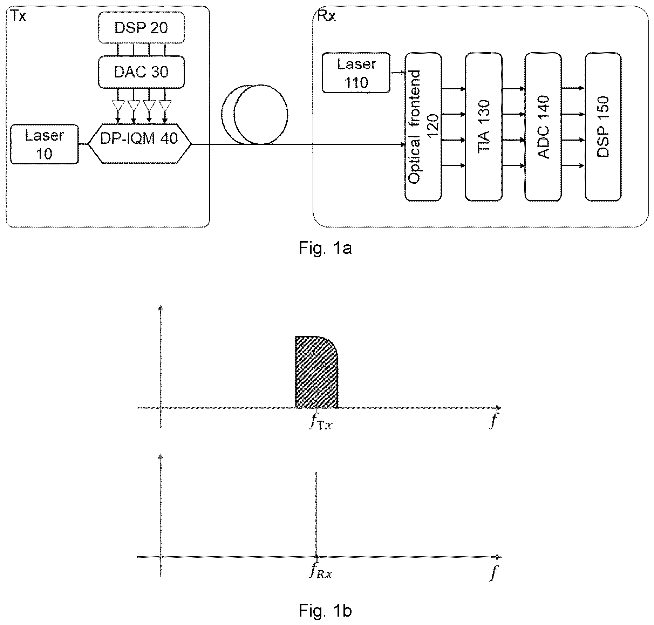

Figure 1a shows a schematic block diagram of a P2P communication system implementing IQM and coherent-reception.

As shown in Figure 1a, on the transmitter side, a frequency stable laser which emits at *f*_{Tx} is used. DSP 20, Digital to Analog Converter, DAC 30 and Dual-polarization in-phase quadrature modulators DP-IQM 40 are implemented to modulate the signal. For example, the DSP 20 may perform a pre-processing of the digital data such as Forward Error Correction (FEC) encoding, symbol mapping, pre-compensation of channel impairments, and spectral shaping of the transmit signals. The DAC 30 may convert the digital signals to corresponding voltages that are fed to the DP-IQM 40 for modulation of the amplitude and phase of two orthogonal polarization states of the fiber. A skilled person should know various ways of implementing IQM, thus it will not be elaborated here further in detail.

On the receiver side, the P2P communication system that works in well-defined wavelength grid (e.g., ITU grid) employs for example C-band (1528 nm - 1566 nm) tunable laser 110 as an LO. An optical frontend 120 in this example may comprise dual-polarization 90° optical hybrid, 4 balanced photodiodes (BPDs). A skilled person should understand that the optical frontend 120 may be configured differently. The optical frontend 120 mixes the received downstream signal with the local reference laser 110 to detect the phase and amplitude modulation. Then the electrical signal obtained by the photodiodes will be provided to TIA 130 for amplification. Then the ADC 140 may convert the voltage levels obtained at the TIA 130 outputs to digital signals. The DSP unit 150 may perform demodulation, symbol de-mapping and decoding, which may include steps such as compensation of clock, frequency, and phase offsets between the transmitter and receiver, or receiver-side equalization, etc. Although ADC 140 and DSP 150 are described as separate function blocks, a skilled person should understand that ADC 140 may be implemented as part of a DSP chip.

Figure 1b shows schematic optical spectra of the downstream signal and the LO used in the system of Figure 1a.

The top figure in Figure 1b shows the spectrum of the downstream signal. The spectrum of the downstream signal centers at *f*_{Tx}.

The bottom figure in Figure 1b shows the spectrum of the LO at the receiver side. The receiver has prior knowledge of the transmit laser frequency (typically, it uses ITU-T grid) and the receiver tunes the LO laser to a similar frequency.

If it were possible to directly adopt the receiver architecture from P2P system in PON system, there would not be any wavelength alignment problem. However, due to the cost limitations of the PON system, it is not possible to use such receiver in PON.

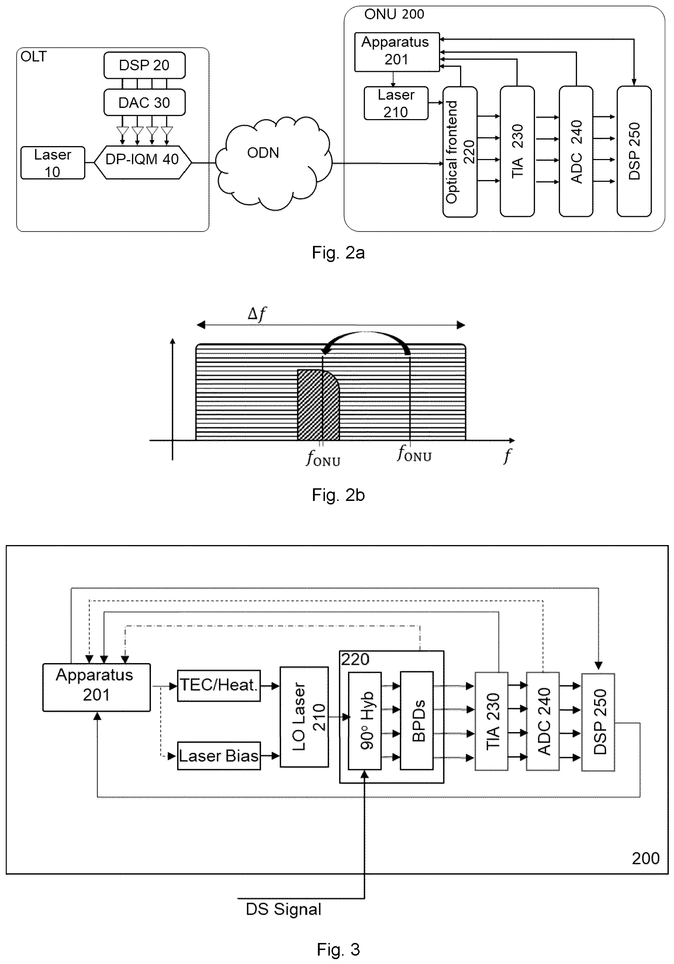

Figure 2a shows a schematic block diagram of a PON communication system implementing IQM and coherent-reception according to an embodiment.

In the embodiment shown in Figure 2a. The OLT side is constructed similarly as the transmitter described above with respect to P2P system in Figure 1a with PON specific adaption known to a skilled person. For simplicity, it will not be further elaborated.

On the ONU 200 side, comparing to the receiver side in Figure 1a, laser 210 is used to replace high cost tunable, pre-calibrated laser 110. The laser 210 is uncalibrated in terms of the relationship between the operation parameter and the emission frequency of the laser. Specifically, such uncalibrated lasers may suffer from wavelength inaccuracies due to manufacturing tolerances and temperature-induced wavelength drift.

The ONU receiver 200 does not have any prior knowledge about the frequency information of the received/downstream signal. Meanwhile, it has no information about the exact emission frequency of the LO laser 210 either.

In one example embodiment, the laser may be a distributed feedback, DFB, laser. It is not possible to ensure the exact emission frequency/wavelength of such a cheap laser. Typically, it may emit in a certain frequency / wavelength band Δf / Δλ (e.g., 500 GHz/± 2 nm) in room temperature (e.g., T = 25°C) due to fabrication / process-line inaccuracy.

Figure 2b shows schematic optical spectra of the downstream signal and the laser 210 used in the ONU of Figure 2a.

In Figure 2b, f_{ONU} may be the emission frequency of the laser 210, for example the DFB laser. In practice, the uncalibrated laser 210 may emit a frequency anywhere within the range Δf marked by the horizontal stripes in Figure 2b. In the following, the range Δf may be referred to as tuning range of laser 210.

Meanwhile, the spectrum of the downstream signal is marked by diagonal stripes. A skilled person should understand, the frequency of the downstream signal should fall within the tuning range of the laser 210. Thus, the laser 210 is suitable to be used as a local oscillator for a coherent optical receiver in an ONU 200.

It can be seen that the tuning range of the laser 210 is so broad that it is possible that the frequency offset between the emission frequency of the laser 210 and the frequency of the downstream signal is in the order of tens of GHz, much higher than the highest frequency offset that the frequency offset estimation algorithm adopted by the DSP 250 could determine. Thus, simply replacing the laser 110 with low-cost laser 210 would not work, since the DSP unit 250 would not be able to determine the correct parameters such as frequency offset, etc.. It is not possible to simply use the feedback from the DSP to find the optimum laser parameters without coarse alignment of the LO laser.

Thus, as shown by the thick curved arrow in Figure 2a, it is necessary to adjust the frequency of the laser 210 so as to reduce the frequency offset between the emission frequency of the laser 210 and the frequency of the downstream signal.

Purpose is to reduce the frequency offset such that it is not higher than a predetermined value. The predetermined value may be for example the highest frequency offset that the frequency offset estimation algorithm adopted by the DSP 250 could determine.

In the example of Figure 2a, the apparatus 201 according to various embodiments is implemented in the ONU 200. Alternatively, the apparatus 201 may also be implemented outside the ONU 200 and communicatively connected to the ONU 200.

Figure 3 shows a detailed block diagram of the ONU of Figure 2a.

The apparatus 201 is configured to adjust an operation parameter of the laser 210, thereby adjusting an emission frequency of the laser.

In the embodiment shown in Figure 3, the operation parameter may comprise a temperature of the laser, or a bias current of the laser.

As shown in Figure 3, a solid line connects the apparatus 201 and a means for adjusting the temperature of the laser. Specifically, the apparatus 201 may adjust the temperature of the laser by adjusting a current of a thermoelectric cooler, TEC, or by adjusting a voltage applied to a thermal heater cointegrated with the laser.

A dash line connects the apparatus 201 and a means for adjusting the bias current of the laser. Additionally or alternatively, the apparatus 201 may adjust the bias current of the laser 210 so as to change the emission frequency of the laser 210. A skilled person should know various ways of adjusting the bias current of a laser, therefore, detailed description will be omitted here.

Laser frequency tuning by changing the temperature is preferred, because it is easier comparing to changing the laser bias current. Furthermore, both current and temperature will also change the other laser characteristics such as noise, linewidth, sidemode suppression ratio. Therefore, the tuning range may be limited to the range within which the performance change will not be critical. In the following, embodiments will be elaborated considering temperature as the adjusted operation parameter.

The apparatus 201 is configured to obtain an indication of an electrical power of a downstream signal received by the coherent optical receiver, while adjusting the operation parameter.

Specifically, the indication of the electrical power may be obtained from at least one of an optical frontend 220, a transimpedance amplifier (TIA) 230, or an ADC 240.

Similar as elaborated with respect to Figure 1a, the optical frontend 220 in Figure 3 may comprise dual-polarization 90° optical hybrid, and 4 balanced photodiodes (BPDs). A skilled person should understand that the optical frontend 220 may be configured differently. Generally, the optical frontend 200 may have the function of mixing the received downstream signal with the local reference laser 210 to detect the phase and amplitude modulation and converting optical signals into electrical signals.

Specifically, as shown by the dash dot line with an arrow from the optical frontend 220 to the apparatus 201, the apparatus 201 may obtain the indication of the electrical power from the optical frontend 220. For example, the BPDs of the optical frontend 220 may convert optical signal into electrical signal and provide such electrical signal to TIA 230 for amplification. Meanwhile, the electrical signal obtained at the output of the optical frontend 220 may also be provided to the apparatus 201 as an indication of the electrical power of the downstream signal received by the coherent optical receiver. The apparatus 201 may be configured to determine the electrical power of the received downstream signal based on the output signal of the optical frontend 220. Alternatively, a further means (not shown) may be configured for example between the optical frontend 220 and the apparatus 201 to determine the electrical power of the received downstream signal based on the output of the optical frontend 220 and provide the determined electrical power to the apparatus 201 as the indication of the electrical power.

Additionally or alternatively, as shown by the solid line with an arrow from the TIA 230 to the apparatus 201, the apparatus 201 may obtain the indication of the electrical power from the TIA 230.

For example, the TIA 230 may provide amplified electrical signal to the ADC 240. The output signal of the TIA 230 may also be provided by the TIA 230 to the apparatus 201 as the indication of the electrical power. The apparatus 201 may be configured to determine the electrical power of the received downstream signal based on the output signal of the TIA 230. Alternatively, a further means (not shown) may be configured between the TIA 230 and the apparatus 201 to determine the electrical power of the received downstream signal based on the output of TIA 230 and provide the determined electrical power to the apparatus 201 as the indication of the electrical power.

Additionally or alternatively, TIA 230 may provide other information related to the electrical power of the DS signal as the indication of electrical power to the apparatus 201, for example the Received Signal Strength (RSS) and/or the Gain Current (GC).

Additionally or alternatively, as shown by the dash line with an arrow from the ADC 240 to the apparatus 201, the apparatus 201 may obtain the indication of the electrical power from the ADC 240.

The ADC 240 may provide output signal to the DSP unit 250. The output signal of the ADC 240 may be provided by the ADC 240 to the apparatus 201 as the indication of the electrical power. A skilled person shall understand, although the ADC 240 and the DSP 250 are shown as separate function blocks, the ADC may be a part of the DSP chip and integrated together with proper client interface.

The apparatus 201 may be configured to determine the electrical power of the received downstream signal for example based on the output of the ADC 240. Alternatively, a further means (not shown) may be configured between ADC 240 and the apparatus 201 to determine the electrical power of the received downstream signal based on the output signal of the ADC 240 and provide the determined electrical power to the apparatus 201 as the indication of the electrical power.

The apparatus 201 is further configured to determine a first target range of the operation parameter based on a relationship between the obtained indication of the electrical power and the corresponding operation parameter, wherein the emission frequency of the laser corresponding to the first target range is aligned to the frequency of the downstream signal.

A skilled person should understand that the emission frequency of the laser being aligned to the frequency of the downstream signal means the emission frequency of the laser is same as or close to the frequency of the downstream signal. In other words, it means that the offset between the emission frequency of the laser and the frequency of the downstream signal is lower than or not higher than a predetermined value. The predetermined value may be related to various factors, for example the sensitivity and algorithms adopted by the DSP 250, for example frequency offset estimation algorithm. In one example, the predetermined value may correspond to the highest frequency offset that the frequency offset estimation algorithm adopted by the DSP 250 could determine.

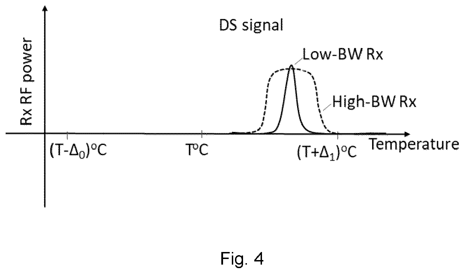

A correspondence between the electrical power and the adjusted operation parameter may be established while the operation parameter is adjusted. Figure 4 shows an example curve of the obtained electrical power as a function of the temperature of the laser.

In Figure 4, the vertical axis shows the obtained electrical power of the received downstream signal, and the horizontal axis represents the temperature of the laser 210.

Alternatively, in the example where the apparatus 201 receives RSS from the TIA, similar curve may be obtained with the vertical axis representing the RSS.

Alternatively, according to the means adopted for adjusting the temperature of the laser 210, similar curve may be obtained with the horizontal axis representing the current provided to the TEC or voltage applied to the thermal heater. In practice, no temperature sensor is required to determine the temperature of the laser. The temperature may be represented for example by the current provided to the TEC or voltage applied to the thermal heater.

In one example, the apparatus 201 may adjust the temperature of the laser in steps of 2°C so that the frequency of the laser is swept from f₀ to f₁. The depth of the steps may be different from the given example. Specifically, the apparatus 201 may adjust the current provided to the TEC or voltage applied to the thermal heater to achieve similar result.

In the example of Figure 4, the initial temperature of the laser may be T°C. The emission frequency of the laser may be f₀ at the temperature of (T-Δ₀)°C, and the emission frequency of the laser may be f₁ at the temperature of (T+Δ₁)°C. The parameters Δ₀ and Δ₁ may have same or different values. The sweeping of the frequency may be implemented in any direction. For example, the temperature of the laser may be adjusted from (T-Δ₀)°C to (T+Δ₁)°C, or from (T+Δ)°C to (T-Δ₀)°C. It is also possible that the sweeping of frequency is carried out partly. For example, the temperature of the laser may be adjusted from T°C first to (T-Δ₀)°C or from T°C to (T+Δ₁)°C. If the indication of the electrical power shows that the electrical power of the received downstream signal is higher than a predetermined threshold, then the apparatus 201 may not sweep the rest part, namely from T°C to (T+Δ₁)°C or from T°C first to (T-Δ₀)°C.

The tolerable wavelength / frequency ranges of a PON are usually defined in the standard. Consequently, the temperature range / TEC-current / heater-voltage range can be predefined.

As shown by the solid curve in Figure 4, for low bandwidth receiver, a peak can be observed in the received electrical power.

Meanwhile, as shown by the dashed curve in Figure 4, for high bandwidth receiver, a plateau can be observed in the received electrical power.

Specifically, in one embodiment, the apparatus 201 may be configured to determine a maximum or a maximum range of the electrical power of the received downstream signal; and to determine a range of the operation parameter corresponding to the maximum or the maximum range of the electrical power as the first target range.

Specifically, an optimization method for example Golden section search or Fibonacci search may be applied to find out the maximum range of the electrical power and its corresponding temperature. The temperature range corresponding to the maximum or maximum range of the electrical power may be determined as the first target range of temperature.

In the example shown in Figure 4, for low bandwidth receiver, the first target range may be determined as from Tₘₐₓᵢₘᵤₘ - t_{dep} to Tₘₐₓᵢₘᵤₘ + t_{dep}, wherein, Tₘₐₓᵢₘᵤₘ is the temperature corresponding to the maximum electrical power, t_{dep} is the depth of steps for adjusting the temperature. For high bandwidth receiver, a skilled person should know various ways to find the middle of the plateau and then determine the first target range similarly as described with respect to low bandwidth receiver.

In the example where the apparatus 201 receives the measured TIA-gain current (GC) from the TIA as the indication of electrical power, optimization algorithms may be applied to find the minimum of the TIA-GC, which corresponds to the highest electrical power of the received DS signal. In case of very low received optical power, the dip will be very small.

Specifically, if the temperature of the laser 210 is configured to fall within the first target range, the emission frequency of the laser 210 would be coarsely aligned to the frequency of the downstream signal. In the present disclosure, the emission frequency of the laser 210 being coarsely aligned to the frequency of the downstream signal refers to the situation that the frequency offset between the emission frequency of the laser 210 and the frequency of the downstream signal is not higher than a predetermined value. The predetermined value may be for example the highest frequency offset that the frequency offset estimation algorithm adopted by the DSP 250 could determine. Thereby, the coarse alignment allows the DSP 250 to provide reasonable feedback to further assist the alignment of the emission frequency of the laser with the frequency of the downstream signal. In the following, "coarse alignment" may be used to represent the procedure described above.

In one embodiment, the apparatus 201 may further configure the operation parameter to fall within the first target range.

Alternatively, the determined first target range may be provided to a further entity or function unit. The further entity or function unit may configure the operation parameter to fall within the first target range.

Reference is made back to Figure 3, as indicated by the solid line with an arrow from the apparatus 201 to the DSP 250, the apparatus 201 may be further configured to initialize the DSP unit 250 after the operation parameter is configured to fall within the first target range, wherein, the DSP 250 is configured to provide feedback assisting alignment of the emission frequency of the laser with the frequency of the downstream signal.

As indicated by the solid line with an arrow from the DSP 250 to the apparatus 201, DSP 250 may provide feedback to the apparatus 201. The feedback from the DSP unit comprises at least one of: estimated frequency offset, EFO; bit error ratio, BER; error vector magnitude, EVM; or forward error correction errors per codeword, FEC-EPC.

In one embodiment, the estimated frequency offset may be determined using data aided or non-data aided (NDA) frequency offset estimator algorithm.

NDA FOE algorithms have very limited range (e.g., ±5GHz in one low-bandwidth example). Data aided FOE algorithms have higher tolerance compared to NDA (e.g., ±15GHz in the low-bandwidth example). In some examples, NDA algorithms are preferred because no training data is required within the transmitted data stream, which results in a higher service rate (throughput).

The apparatus 201 may further adjust the operation parameter based on the feedback from the DSP unit.

A skilled person should know various ways of adjusting the operation parameter based on the feedback from the DSP unit. For example, the apparatus 201 may change the temperature and/or bias current of the laser 210 based on the estimated frequency offset information received from the DSP. The adjustment of the operation parameter based on feedback from the DSP may be referred as fine tuning in the present disclosure.

In the embodiment described above, the function of fine tuning may be implemented in the apparatus 201. In other examples, the function of fine tuning may be implemented outside the apparatus 201, for example by another fine control circuit (not shown) in the ONU.

In one embodiment, the apparatus 201 may further determine whether the emission frequency of the laser is still aligned with the frequency of the downstream signal based on the feedback from the DSP unit. Upon determining the emission frequency of the laser has lost alignment with the frequency of the downstream signal, the apparatus 201 may repeat the procedure as described above to coarsely align the emission frequency of the laser with the frequency of the downstream signal.

In one embodiment, the apparatus 201 may further perform an initial state of an ONU activation process as defined in the standard, after the operation parameter is configured to fall within the first target range.

The "ONU activation process" of an ONU receiver based on IM/DD technique is explained in the ITU-T document of G.987.3 section 12. The activation process of an ONU is defined as follows 01: Initial state, 02: Serial Number state, 03: Ranging state, 04: Operation state, 05: Intermittent LODS state, 06: Emergency Stop state.

For a coherent ONU, the coarse alignment described above may be performed prior to the initial state.

In another example, the apparatus 201 or the fine control circuit may maintain the alignment between the emission frequency of the laser 210 and the downstream signal based on feedback from TIA or ADC. Thus, it is possible to turn off the DSP, or ADCs along with the DSP to reduce the power consumption of the receiver / ONU during low demand hours.

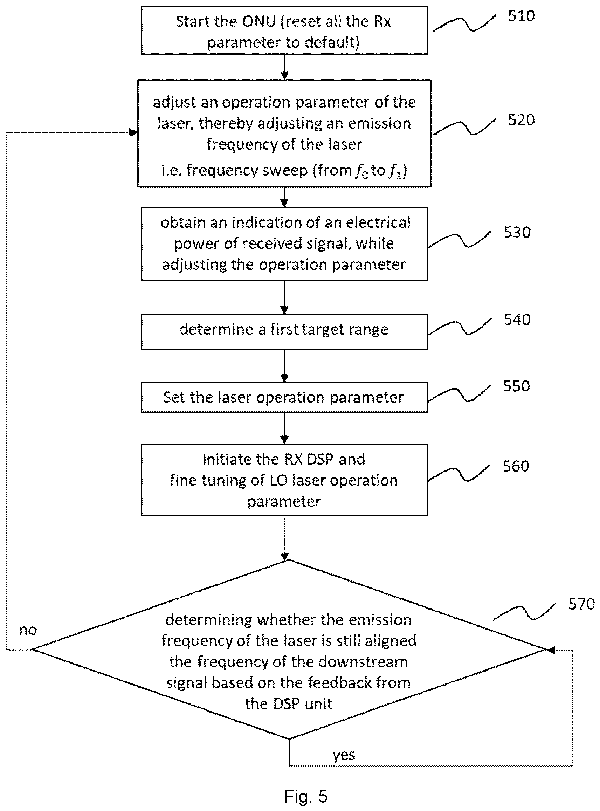

Figure 5 shows a flow diagram according to example methods implementing various embodiments.

In the example of Figure 5, all method steps are implemented in the apparatus 201 inside the ONU 200. Alternatively, some of the method steps may be implemented by the ONU and some of the method steps may be implemented for example in the apparatus 201 outside the ONU and communicatively connected to the ONU.

In Figure 5, the ONU is started at step S510 with all the reception parameter being reset to default.

In step S520, an operation parameter of a laser 210 is adjusted, thereby an emission frequency of the laser 210 is adjusted, wherein the laser 210 is suitable to be used as a local oscillator for a coherent optical receiver in an ONU, wherein the laser 210 is uncalibrated in terms of the relationship between the operation parameter and the emission frequency of the laser.

In step S530, while adjusting the operation parameter, an indication of an electrical power of a downstream signal received by the coherent optical receiver is obtained.

In step S540, a first target range of the operation parameter is determined based on a relationship between the obtained indication of the electrical power and the corresponding operation parameter, wherein the emission frequency of the laser corresponding to the first target range is aligned to the frequency of the downstream signal.

In step S550, the operation parameter is configured to fall within the first target range.

In step S560, a DSP unit 250 may be initiated to provide feedback assisting alignment of the emission frequency of the laser with the frequency of the downstream signal, after the operation parameter is configured to fall within the first target range. Accordingly, fine tuning of the laser operation parameter may be initiated as well.

Optionally, in step S570, it may be determined whether the emission frequency of the laser is still aligned with the frequency of the downstream signal based on the feedback from the DSP unit. Upon determining the emission frequency of the laser has lost alignment with the frequency of the downstream signal, the method goes back to step S520, and the procedure of S520-S570 may be repeated. If it is determined that the emission frequency of the laser is still aligned with the frequency of the downstream signal, the method may repeat step S570 periodically to monitor the alignment.

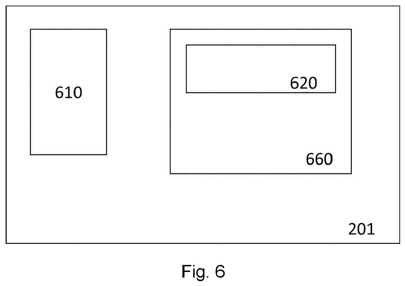

Figure 6 shows an example block diagram of an apparatus 201 operating in accordance with various embodiment.

The apparatus 201 includes a processor 610 and a memory 660. In other examples, the apparatus 201 may comprise multiple processors.

In the example of Figure 6, the processor 610 is a control unit operatively connected to read from and write to the memory 660. The processor 610 may also be configured to receive control signals received via an input interface and/or the processor 610 may be configured to output control signals via an output interface. In an example embodiment the processor 610 may be configured to convert the received control signals into appropriate commands for controlling functionalities of the apparatus.

The memory 660 stores computer program instructions 620 which when loaded into the processor 610 control the operation of the apparatus 201 as explained above. In other examples, the apparatus 201 may comprise more than one memory 660 or different kinds of storage devices.

Computer program instructions 620 for enabling implementations of example embodiments of the invention or a part of such computer program instructions may be loaded onto the apparatus 201 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 201 comprises means, wherein the means comprises at least one processor 610, at least one memory 660 including computer program code 620, the at least one memory 660 and the computer program code 620 configured to, with the at least one processor 610, cause the performance of the apparatus 201.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 6. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. An apparatus (201), comprising means for:
- adjusting an operation parameter of a laser (210), thereby adjusting an emission frequency of the laser (210), wherein the laser (210) is suitable to be used as a local oscillator for a coherent optical receiver in an optical network unit, ONU, wherein the laser (210) is uncalibrated in terms of the relationship between the operation parameter and the emission frequency of the laser;
- obtaining an indication of an electrical power of a downstream signal received by the coherent optical receiver, while adjusting the operation parameter;
- determining a first target range of the operation parameter based on a relationship between the obtained indication of the electrical power and the corresponding operation parameter, wherein the emission frequency of the laser corresponding to the first target range is aligned to the frequency of the downstream signal.

2. The apparatus (201) according to claim 1, wherein the means are further configured for:
- determining a maximum or a maximum range of the electrical power of the received downstream signal;
- determining a range of the operation parameter corresponding to the maximum or the maximum range of the electrical power as the first target range.

3. The apparatus (201) according to any preceding claim, wherein the means are further configured for:
- configuring the operation parameter to fall within the first target range.

4. The apparatus (201) according to the preceding claim, wherein the means are further configured for:
- initializing a digital signal processing, DSP, unit (250) configured to provide feedback assisting alignment of the emission frequency of the laser with the frequency of the downstream signal, after the operation parameter is configured to fall within the first target range.

5. The apparatus (201) according to the preceding claim, wherein the means are further configured for:
- further adjusting the operation parameter based on the feedback from the DSP unit (250).

6. The apparatus (201) according to any of claims 4-5, wherein the means are further configured for:
- determining whether the emission frequency of the laser has lost alignment with the frequency of the downstream signal based on the feedback from the DSP unit (250);
- repeating the operation of claim 1 upon determining the emission frequency of the laser has lost alignment with the frequency of the downstream signal.

7. The apparatus (201) according to any of claims 4-6, wherein the feedback from the DSP unit (250) comprises at least one of:
estimated frequency offset, EFO;
bit error ratio, BER;
error vector magnitude, EVM; and
forward error correction errors per codeword, FEC-EPC.

8. The apparatus (201) according to the preceding claim, wherein, the estimated frequency offset is determined using data aided or non-data aided frequency offset estimator algorithm.

9. The apparatus (201) according to any of claims 3-8, wherein the means are further configured for:
- performing an initial state of an ONU activation process, after the operation parameter is configured to fall within the first target range.

10. The apparatus (201) according to any preceding claim, wherein the laser is a distributed feedback, DFB, laser.

11. The apparatus (201) according to any preceding claim, wherein the operation parameter comprises a temperature of the laser and/or a bias current of the laser.

12. The apparatus (201) according to the preceding claim, wherein the operation parameter is the temperature of the laser, and wherein the means are further configured for:
- adjusting the temperature of the laser by adjusting a current of a thermoelectric cooler, TEC, or by adjusting a voltage applied to a thermal heater cointegrated with the laser.

13. The apparatus (201) according to any preceding claim, wherein the means are further configured for:
- obtaining the indication of the electrical power from at least one of:
an optical frontend (220);
a transimpedance amplifier, TIA (230), or
an Analog to Digital Convertor, ADC (240).

14. A method, comprising:
- adjusting an operation parameter of a laser (210), thereby adjusting an emission frequency of the laser (210), wherein the laser (210) is suitable to be used as a local oscillator for a coherent optical receiver in an optical network unit, ONU, wherein the laser (210) is uncalibrated in terms of the relationship between the operation parameter and the emission frequency of the laser;
- obtaining an indication of an electrical power of a downstream signal received by the coherent optical receiver, while adjusting the operation parameter;
- determining a first target range of the operation parameter based on a relationship between the obtained indication of the electrical power and the corresponding operation parameter, wherein the emission frequency of the laser corresponding to the first target range is aligned to the frequency of the downstream signal.

15. A computer program comprising instructions for causing an apparatus to perform at least the following:
- adjusting an operation parameter of a laser (210), thereby adjusting an emission frequency of the laser (210), wherein the laser (210) is suitable to be used as a local oscillator for a coherent optical receiver in an optical network unit, ONU, wherein the laser (210) is uncalibrated in terms of the relationship between the operation parameter and the emission frequency of the laser;
- obtaining an indication of an electrical power of a downstream signal received by the coherent optical receiver, while adjusting the operation parameter;
- determining a first target range of the operation parameter based on a relationship between the obtained indication of the electrical power and the corresponding operation parameter, wherein the emission frequency of the laser corresponding to the first target range is aligned to the frequency of the downstream signal.
